# EUROPÄISCHE PATENTSCHRIFT

(11) **EP 3 351 710 B1**
(45) Veröffentlichungstag und Bekanntmachung des Hinweises auf die Patenterteilung: **11.03.2020**
(21) Anmeldenummer: 18151414.2
(22) Anmeldetag: 12.01.2018
(51) Int. Cl.: E05B 1/00

(54) **BETÄTIGUNGSMITTEL MIT SENSOREINRICHTUNGEN UND ZUGEHÖRIGES VERFAHREN**
ACTUATING DEVICE WITH SENSOR DEVICES AND ASSOCIATED METHOD
MOYEN D'ACTIONNEMENT DOTÉ DU DISPOSITIF CAPTEUR ET PROCÉDÉ ASSOCIÉ

(30) Priorität: 24.01.2017 DE 102017000628
(43) Veröffentlichungstag der Anmeldung: 25.07.2018
(73) Patentinhaber: Leesys - Leipzig Electronic Systems GmbH, 04329 Leipzig (DE)
(72) Erfinder: Pastillé, Holger, Dr., 04329 Leipzig (DE); Wirth, Sebastian, 04329 Leipzig (DE)
(74) Vertreter: Wachenhausen & Kollegen Patentanwälte GbR

(56) Entgegenhaltungen:
- WO-A1-2011/141056
- DE-A1-102005 031 106
- DE-A1-102011 013 730
- DE-A1-102011 110 850

## Beschreibung

### Gebiet der Erfindung

Die vorliegende Erfindung betrifft ein Betätigungsmittel, wie beispielsweise einen Fenstergriff oder einen Türgriff, mit integrierten Sensoreinrichtungen.

### Hintergrund der Erfindung

Betätigungseinrichtungen, wie beispielsweise Türgriffe und Fenstergriffe werden, wie allgemein bekannt, an Bauteilen, wie beispielsweise an Türen und Fenstern montiert, um Schließvorrichtungen, welche in den Bauteilen integriert sind, durch (rotatorische) Betätigung der Betätigungseinrichtungen öffnen oder schließen zu können.

Zur Überwachung des Zustands der Bauteile, wie beispielsweise der Türen und Fenster, ist im Stand der Technik beispielsweise die Verwendung von herkömmlichen Schaltern, Reed-Kontakten, Lichtschranken oder Drucksensoren bekannt, welche beispielsweise am Rahmen der Fenster angebracht sein können.

Zur Glasbruchdetektion sind wiederum Sensoren bekannt, welche jedoch sichtbar auf jeder Scheibe aufgeklebt werden müssen.

Auch die Verwendung von Überwachungsanordnungen, welche sich im Bewegungsradius eines Türgriffs bzw. einer Türklinke befinden, und das Betätigen des Türgriffs bzw. der Türklinke detektieren, ist aus dem Stand der Technik bekannt, wie beispielsweise der DE 10 2011 110 850 A1 und der DE 10 2011 013 730 A1 zu entnehmen.

### Zusammenfassung der Erfindung

Es mag erwünscht sein eine verbesserte Detektionseinheit für eine Betätigungseinrichtung bereitstellen.

Gemäß einer Ausführungsform weist eine Betätigungsmittelanordnung ein Betätigungsmittel zur Betätigung eines Schließmechanismus eines Bauteils auf, wobei das Betätigungsmittel einen Beschleunigungssensor zur Messung einer Beschleunigung, welche auf das Betätigungsmittel wirkt und zur Ausgabe von ersten Messwerten; und einen Drehratensensor zur Messung einer Winkelgeschwindigkeit um eine Drehachse und zur Ausgabe von zweiten Messwerten umfasst. Die Betätigungsmittelanordnung umfasst ferner eine Bestimmungseinheit, welche eingerichtet ist zur Bestimmung eines Zustandes des Schließmechanismus mittels Bestimmung der Lage des Betätigungsmittels im Raum basierend auf den ersten Messwerten des Beschleunigungssensors, und zur Bestimmung eines Öffnungswinkels des Bauteils basierend auf den zweiten Messwerten des Drehratensensors.

Ein Zustandsbestimmungsverfahren für ein Betätigungsmittel nach einer Ausführungsform umfasst die Schritte, Messen einer Beschleunigung, welche auf das Betätigungsmittel wirkt mittels eines Beschleunigungssensor des Betätigungsmittels; Messen einer Winkelgeschwindigkeit entlang einer Drehachse mittels eines Drehratensensors; Bestimmen eines Zustandes eines Schließmechanismus mittels Bestimmung der Lage des Betätigungsmittels im Raum basierend auf den ersten Messwerten des Beschleunigungssensors; und Bestimmen eines Öffnungswinkels eines Bauteils basierend auf den zweiten Messwerten des Drehratensensors.

Bevorzugt ist Bestimmungseinheit im Betätigungsmittel angeordnet.

Ferner umfasst die Betätigungsmittelanordnung ferner bevorzugt eine externe Einheit, das Betätigungsmittel umfasst ferner eine drahtlose Sendeeinheit zur drahtlosen Übertragung eines Ausgangssignals der Bestimmungseinheit, und die externe Einheit umfasst ferner eine drahtlose Empfangseinheit zum drahtlosen Empfang des durch die drahtlose Sendeeinheit gesendeten Ausgangssignals.

Ferner umfasst die Betätigungsmittelanordnung ferner bevorzugt eine externe Einheit, das Betätigungsmittel umfasst ferner eine drahtlose Sendeeinheit zur drahtlosen Übertragung der ersten und zweiten Messwerte an die externe Einheit, die externe Einheit umfasst ferner eine drahtlose Empfangseinheit zum drahtlosen Empfang der durch die drahtlose Sendeeinheit gesendeten ersten und zweiten Messwerte, und die Bestimmungseinheit ist in der externen Einheit angeordnet.

Ferner weist das Betätigungsmittel ferner bevorzugt einen ersten Abschnitt und einen zweiten Abschnitt auf, der erste Abschnitt ist zur Anbringung an den Schließmechanismus des Bauteils ausgebildet, der zweite Abschnitt ist im Wesentlichen rechtwinklig zum ersten Abschnitt angeordnet, und der Beschleunigungssensor und der Drehratensensor sind integral im zweiten Abschnitt angeordnet.

Ferner ist bevorzugt der Beschleunigungssensor als 3-Achsen-Beschleunigungssensor ausgebildet, und die Bestimmungseinheit bestimmt die Lage des Betätigungsmittels basierend auf der entlang der Achsen wirkende Erdbeschleunigung.

Ferner ist bevorzugt der Drehratensensor als 3-Achsen-Drehratensensor ausgebildet, und die Bestimmungseinheit bestimmt den Öffnungswinkel des Bauteils basierend auf der durch die Bestimmungseinheit bestimmten Lage des Betätigungsmittels sowie der um die Achsen wirkenden Winkelgeschwindigkeit.

Ferner ist die Bestimmungseinheit bevorzugt eingerichtet, wenn die Bestimmungseinheit bestimmt, dass der Zustand des Schließmechanismus ein vorbestimmter Zustand ist, den Öffnungswinkel auf Null zu setzen und/oder eine Kalibrierung des Drehratensensors durchzuführen.

Entsprechend umfasst das Zustandsbestimmungsverfahren ferner bevorzugt den Schritt, wenn die Bestimmungseinheit bestimmt, dass der Zustand des Schließmechanismus ein vorbestimmter Zustand ist, des Setzens des Öffnungswinkels auf Null und/oder des Kalibrierens des Drehratensensors.

Ferner ist die Bestimmungseinheit bevorzugt eingerichtet, wenn die Bestimmungseinheit bestimmt, dass der Zustand des Schließmechanismus ein geschlossener Zustand ist, den Drehratensensor in einen Energiesparmodus zu schalten.

Entsprechend umfasst das Zustandsbestimmungsverfahren ferner bevorzugt den Schritt, wenn die Bestimmungseinheit bestimmt, dass der Zustand des Schließmechanismus ein geschlossener Zustand ist, des Schaltens des Drehratensensors in einen Energiesparmodus.

Ferner ist die Bestimmungseinheit bevorzugt eingerichtet, einen sicherheitsrelevanten Zustand basierend auf den ersten Messwerten des Beschleunigungssensors, und/oder basierend auf den zweiten Messwerten des Drehratensensors zu detektieren.

Entsprechend umfasst das Zustandsbestimmungsverfahren ferner bevorzugt den Schritt des Detektierens eines sicherheitsrelevanten Zustand basierend auf den ersten Messwerten des Beschleunigungssensors, und/oder basierend auf den zweiten Messwerten des Drehratensensors.

Ferner umfasst das Betätigungsmittel bevorzugt ein Magnetometer, bevorzugt ein 3-Achsen-Magnetometer, welches eingerichtet ist zum Messen eines von außen einwirkenden Magnetfeldes und zur Ausgabe von dritten Messwerten, wobei die Bestimmungseinheit, eingerichtet ist die Lage des Betätigungsmittels im Raum basierend auf den dritten Messwerten des Magnetometers zu bestimmen, und den Öffnungswinkel des Bauteils basierend auf den dritten Messwerten des Magnetometers zu bestimmen.

Ein Betätigungsmittel zur Betätigung eines Schließmechanismus eines Bauteils durch rotatorische Bewegung des Betätigungsmittels um eine erste Achse nach einer Ausführungsform, umfasst einen Beschleunigungssensor zur Messung einer Beschleunigung, welche auf das Betätigungsmittel wirkt und zur Ausgabe von ersten Messwerten; einen Drehratensensor zur Messung einer Winkelgeschwindigkeit um eine Drehachse und zur Ausgabe von zweiten Messwerten; und eine drahtlose Sendeeinheit zur drahtlosen Übertragung der ersten und zweiten Messwerte an eine externe Einheit.

### Kurze Beschreibung der Figuren

Im Folgenden werden weitere exemplarische Ausführungsbeispiele der vorliegenden Erfindung mit Verweis auf die Figuren beschrieben.
Fig. 1 zeigt eine Betätigungsanordnung nach einer ersten Ausführungsform;
Fig. 2a und Fig. 2b zeigen weitere Ausführungsformen der Betätigungseinrichtung mit einer internen und einer externen Anordnung der Bestimmungseinheit;
Fig. 3 zeigt eine mögliche Ausbildung eines Betätigungsmittels und eine Zuordnung von Schließzuständen;
Fig. 4 zeigt ein Bauteil mit einem Betätigungsmittel.

### Detaillierte Beschreibung von Ausführungsbeispielen

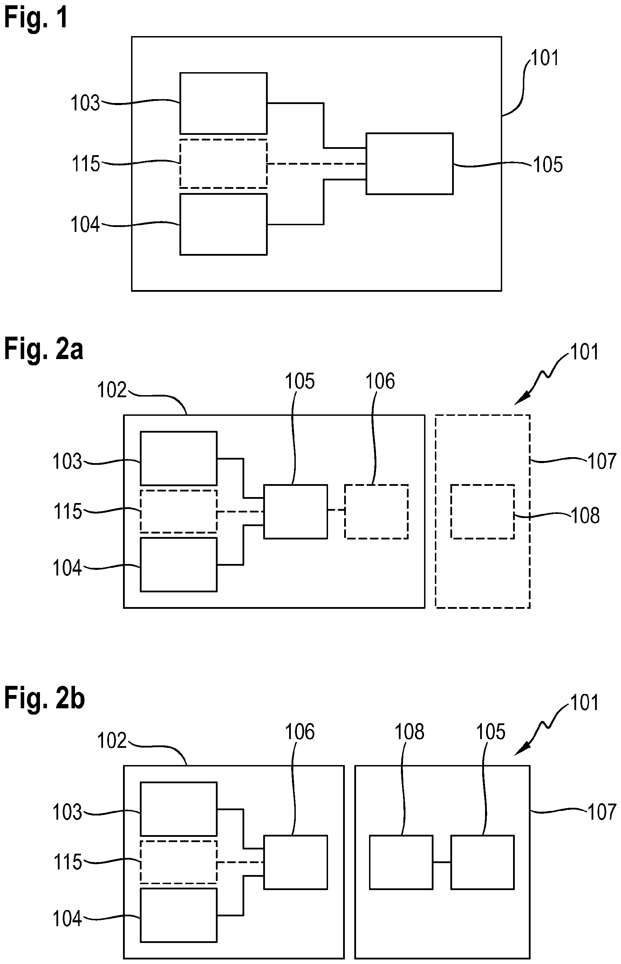

Die Darstellungen in den Figuren sind schematisch und nicht maßstäblich. In der folgenden Beschreibung der Fig. 1 bis Fig. 4 werden die gleichen Bezugsziffern für gleiche oder sich entsprechende Elemente verwendet.

Fig. 1 zeigt eine Betätigungsmittelanordnung nach einer Ausführungsform der Erfindung.

Hierbei umfasst eine derartige Betätigungsmittelanordnung 101, ein Betätigungsmittel (nicht dargestellt), einen Beschleunigungssensor 103, einen Drehratensensor 104, sowie eine Bestimmungseinheit 105.

Der Beschleunigungssensor 103 und der Drehratensensor 104 sind in dem Betätigungsmittel, wie beispielsweise dem Fenstergriff oder Türgriff, angeordnet.

Der Beschleunigungssensor 103 misst die auf das Betätigungselement wirkende Beschleunigung entlang mindestens einer, bevorzugt entlang dreier Achsen (3-Achsen-Beschleunigungssensor) und gibt entsprechende erste Messwerte in Form eines ersten Messwertesignals aus.

Der Drehratensensor 104 misst die auf das Betätigungselement wirkende Winkelgeschwindigkeit um eine Achse, bevorzugt um drei Achsen (3-Achsen-Drehratensensor), und gibt entsprechende zweite Messwerte in Form eines zweiten Messwertsignals aus.

Entsprechend kann mithilfe des Beschleunigungssensors 103 und des Drehratensensor 104 sowohl die auf das Betätigungselement wirkende Beschleunigung als auch die auf das Betätigungselement wirkende Winkelbeschleunigung bestimmt werden.

Zur Weiterverarbeitung werden die ersten und zweiten Messwerte an eine Bestimmungseinheit 105 ausgegeben.

Wie den Figuren 2a und 2b zu entnehmen kann eine derartige Bestimmungseinheit 105 entweder innerhalb des Betätigungselements 102 oder extern in einer externen Einheit 107 angeordnet sein.

Bei Anordnung der Bestimmungseinheit 105 in einer externen Einheit 107 ist, wie der Fig. 2b zu entnehmen, ferner eine drahtlose Übermittlungseinheit 106 in dem Betätigungsmittel 102, sowie eine drahtlose Empfangseinheit 108 in der externen Einheit vorgesehen.

Hierbei werden die ersten und zweiten Messwerte durch die drahtlose Sendeeinheit empfangen, entsprechend verarbeitet und drahtlos an die drahtlose Empfangseinheit 108 der externen Einheit 107 übermittelt.

Im Falle der Anordnung der Bestimmungseinheit 105 innerhalb des Betätigungsmittels 102, wie in Fig. 2a gezeigt, wird die Verarbeitung der Messwerte intern im Betätigungsmittel durch die Bestimmungseinheit 105 durchgeführt.

Hierbei kann, in einer bevorzugten Ausführungsform, ebenfalls eine drahtlose Sendeeinheit 106 vorgesehen sein, welche das Bestimmungsergebnis bzw. ein Ausgangssignal der Bestimmungseinheit an ein externe Einheit 107 drahtlos überträgt.

Die externe Einheit 107 weist hierbei wiederum eine drahtlose Empfangseinheit 108 auf, um das übertragene Ausgangssignal der Bestimmungseinheit 105 zu empfangen.

Die externe Einheit 107 kann wiederum eine Weiterverarbeitungseinheit zur Weiterverarbeitung des empfangenen Signals und/oder eine Ausgabeeinheit zur Ausgabe an einen Benutzer bspw. in Form einer akustischen und/oder visuellen Ausgabe umfassen.

Die Bestimmungseinheit 105 ist eingerichtet mittels der empfangenen ersten und zweiten Messwerte einerseits einen Zustand des Schließmechanismus des Bauteils basierend auf den ersten Messwerten des Beschleunigungssensors 103, und andererseits einen Öffnungswinkel des Bauteils basierend auf den zweiten Messwerten des Drehratensensors 104 zu bestimmen.

Zunächst soll die Bestimmung des Zustands des Schließmechanismus beschrieben werden.

Wie oben dargelegt, ist der Beschleunigungssensor 103 innerhalb des Betätigungsmittels 102, wie beispielsweise eines Fenstergriffs angeordnet.

Mittels des Beschleunigungssensors 103 kann, durch Bestimmen der Einwirkung der Erdbeschleunigung auf den Sensor, die Lage des Sensors im Raum bestimmt werden.

Da die Lage des Beschleunigungssensors 103 innerhalb des Betätigungsmittels 102 fest, d.h. nicht veränderlich, ist, kann somit die Lage des Betätigungsmittels 102 im Raum bestimmt werden. Diese Lage kann auch als Betätigungsmittelstellung oder Griffstellung bezeichnet werden.

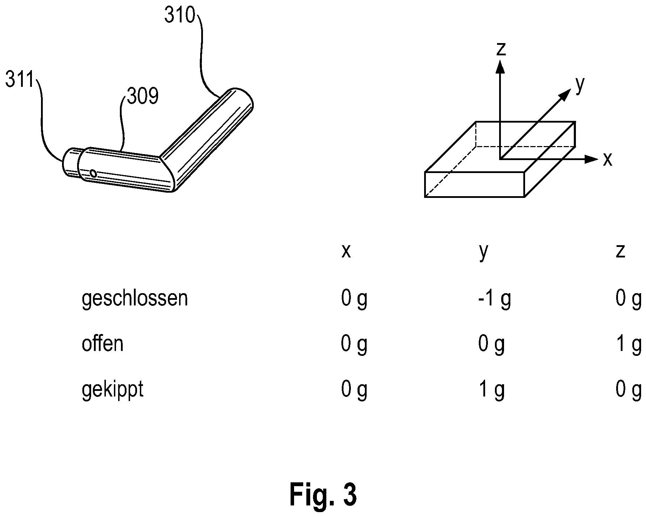

Eine mögliche Ausbildung eines Betätigungsmittels ist der Fig. 3 zu entnehmen. Hierbei weißt das Betätigungsmittel einen ersten Abschnitt 309 und einen zweiten Abschnitt 310 auf.

Der erste Abschnitt weißt wiederum eine Element 311 zur reibschlüssigen Anbringung an ein Element des Schließmechanismus des Bauteils auf. Der zweite Abschnitt 310 ist bevorzugt im Wesentlichen rechtwinklig zum ersten Abschnitt 309 angeordnet und mit dem ersten Abschnitt 309 an der dem Element 311 abgewandten Seite verbunden. Der Beschleunigungssensor 103 und der Drehratensensor 104 sind bevorzugt integral im zweiten Abschnitt 310 angeordnet.

Jeder Lage des Betätigungsmittels im Raum ist über eine vorgegebene Zuordnung ein bestimmter Zustand des Schließmechanismus zugeordnet.

In einer Ausführungsform ist, wenn das Betätigungselement eines Bauteils d.h. beispielsweise der Griff eines Fensters, nach unten ausgerichtet ist, der Schließmechanismus in einem geschlossenen Zustand.

Ist das Betätigungselement horizontal ausgerichtet, ist der Schließmechanismus wiederum in einem offenen Zustand, und ist das Betätigungselement nach oben ausgerichtet, so ist der Schließmechanismus in einem Kipp-Zustand in welchem das Bauteil gekippt werden kann.

Eine entsprechende Zuordnung der Wirkung der Gravitation entlang der X-, Y- und Z-Achse zu einem geschlossenen, geöffneten und gekippten Zustand ist der Fig. 3 zu entnehmen.

Selbstverständlich sind auch andere Zuordnungen der Lage des Betätigungsmittels bzw. des Griffs im Raum (Griff- bzw. Betätigungsmittelstellung) zu einem Zustand des Schließmechanismus denkbar, solang eine derartige Zuordnung vorbekannt ist.

Die Bestimmungseinheit 105 kann somit basierend auf den ersten Messwerten des Beschleunigungssensors 103 eine Lage des Betätigungsmittels im Raum und somit wiederum einen Zustand eines Schließmechanismus des Bauteils bestimmen.

Ferner kann, wie oben beschrieben, der Öffnungswinkel des Bauteils bestimmt werden.

Als Öffnungswinkel des Bauteils ist hierbei der Winkel des Bauteils nach einer Rotation um eine Rotationsachse mit Bezug auf eine Nullstellung des Bauteils zu verstehen.

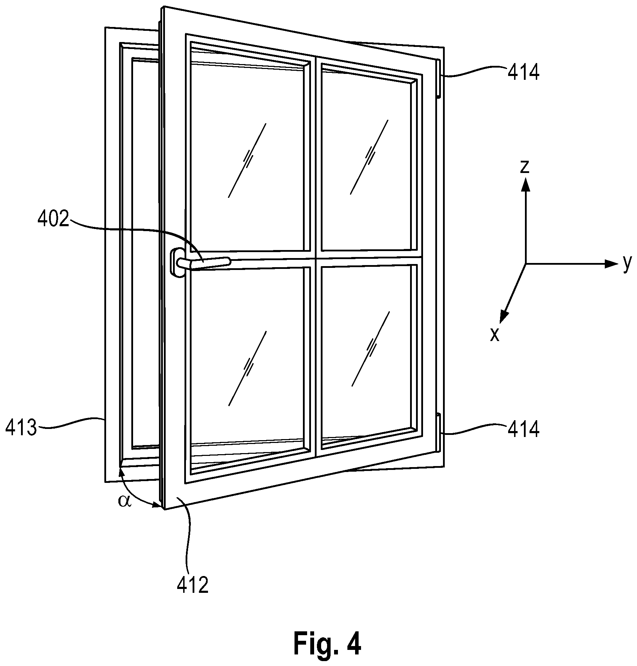

Wie der Fig. 4 zu entnehmen, ist ein Bauteil 412, wie beispielsweise ein Fenster oder eine Tür, im Allgemeinen einseitig, beispielsweise mittels einer Tür- oder Fensterangel 414, drehbar gelagert. An der gegenüberliegenden Seite ist im Allgemeinen das Betätigungsmittels 402 und der Schließmechanismus angeordnet.

Das Bauteil 412 kann aus einem geschlossenen Zustand, in welchem es bündig in einem zugehörigen Bauteilrahmen 413 anliegt, heraus bewegt werden. Der Winkel a, um welchen sich das Fenster mit Bezug auf den geschlossenen Zustand, d.h. die Nullstellung, bewegt wird im Folgenden als Öffnungswinkel des Bauteils bezeichnet.

Selbstverständlich ist auch eine anderweitige Definition einer Nullstellung denkbar.

Wird das Bauteil um seine Drehachse aus der Nullstellung bewegt, so wirkt eine entsprechende Winkelgeschwindigkeit auf den Drehratensensor 104 des Betätigungselements 102 bzw. um die Achse des Drehratensensors, welche parallel zur Drehachse des Bauteils ist.

Durch Auswerten der zweiten Messwerte des Drehratensensors 104 mittels der Bestimmungseinheit 105, bspw. durch Integration der Drehrate, welche einer Winkelgeschwindigkeit entspricht, über der Zeit, kann somit der Öffnungswinkel α bestimmt werden.

Hierbei kann die Bestimmung einerseits ausschließlich basierend auf den zweiten Messwerten des Drehratensensors 104 erfolgen. Hier wird davon ausgegangen, dass sich der Schließmechanismus bei einem Öffnen des Fensters in einem offenen Zustand befinden muss, und somit auch der Griff eine entsprechende Lage aufweisen muss. Es kann somit eine Auswertung nur basierend auf den zweiten Messwerten erfolgen, da die Lage des Griffs, und somit die Lage des Sensors bzgl. der Drehachse, vorgegeben ist.

Andererseits kann die Bestimmung zusätzlich zu den zweiten Messwerten des Drehratensensors 104 bevorzugt unter Berücksichtigung der durch die Bestimmungseinheit bestimmten Lage des Betätigungsmittels durchgeführt werden. Aus der Lage des Betätigungsmittels ergibt sich hierbei die Lage des Sensors zur Drehachse. Es kann somit bestimmt werden, welche Achse des Drehratensensors parallel zur Drehachse des Bauteils steht.

Aufgrund des Einsatzes eines Drehratensensors kann die Bestimmung des Öffnungswinkels unabhängig von der Bauteilgröße erfolgen. Würde der Öffnungswinkel aus der einwirkenden Beschleunigung abgeleitet werden, müsste der Abstand zwischen Griff und Angel bekannt sein. Bei direkter Auswertung der Drehrate über einen Drehratensensor ist der Ausgangswert des Sensors unabhängig vom Radius der Drehbewegung. Eine Anpassung an unterschiedliche Fenstergrößen entfällt.

Durch den Einsatz zweier Sensoreinrichtungen, nämlich eines Beschleunigungssensors 103 und eines Drehratensensor 104 kann somit nicht nur der Zustand des Schließmechanismus eines Bauteils sondern auch der Öffnungszustand bzw. der genaue Öffnungswinkel des Bauteils bestimmt werden.

Gleichzeitig ermöglicht es die Integration der Sensortechnik in den Fenstergriff die Detektion durchzuführen ohne, dass eine weitere Anpassung oder eine weitere Montage an dem Bauteil vorgenommen werden muss. Dies ermöglicht eine einfache und zeitsparende Installation der Sensortechnik an beliebigen Bauteilen. Auch funktioniert die Sensorik vollkommen unabhängig vom Bauteiltyp. Neben einer genauen Detektion des Öffnungswinkels und der Griffstellung sind diverse andere sicherheitsrelevante Informationen bestimmbar, wie im Folgenden beschrieben werden soll, was es ermöglicht ein vollständiges Abbild der Sicherheits situation des Bauteils, wie bspw. des Fensters, zu erstellen.

Die Leistungsaufnahme der Bauteile ist gering und kann über einen integrierten Energiespeicher, wie beispielsweise eine Batterie erfolgen. Eine Laufzeit von bis zu einem Jahr ist hierbei möglich.

In einer weiteren bevorzugten Ausführungsform kann ferner ein Magnetometer 115 im Betätigungsmittel 102 vorgesehen sein, wie in den Figuren 1, 2a und 2b dargestellt.

Das Magnetometer 115 ist eingerichtet, Betrag und Richtung eines von außen einwirkenden Magnetfeldes bevorzugt in drei unabhängigen Raumachsen zu messen (3-Achsen-Magnetometer) und entsprechende Messwerte auszugeben.

Die Bestimmungseinheit 105 kann hierbei bevorzugt ausgebildet sein, die Lage des Betätigungsmittels im Raum bzw. die Betätigungsmittelstellung bzw. die Griffstellung a) basierend auf den Messwerten des Magnetometers 115 alleine oder b) basierend auf den Messwerten des Magnetometers 115 und den Messwerten des Beschleunigungssensors 103 zu bestimmen.

Durch unterschiedliche Betätigungsmittelstellungen ändert sich der Winkel zwischen Griff und Erdboden, was zu unterschiedlichen Richtungen der Erdbeschleunigung im Bezug auf den Sensor führt. Gleichzeitig ändert sich damit die Richtung, in der das Erdmagnetfeld zum Sensor steht, wenn dieser mit dem Griffstück gedreht wird. Das Erdmagnetfeld wirkt immer parallel zum Erdboden und weist von Nord nach Süd.

Bezugnehmend auf Fig. 3 kann beispielsweise das Magnetfeld bei geschlossener und gekippter Griffstellung in der x-z-Ebene liegen, wohingegen bei geöffneter Griffstellung das Magnetfeld in der x-y-Ebene liegt.

Durch eine Einbeziehung beider Messwerte kann die Sicherheit der Bestimmung erhöht werden, da davon auszugehen ist, dass sich beide Größen in gleichem Maße ändern.

Die Bestimmungseinheit 105 kann hierbei bevorzugt ausgebildet sein, den Öffnungswinkel des Bauteils a) basierend auf den Messwerten des Magnetometers 115 alleine oder b) basierend auf den Messwerten des Magnetometers 115 und den Messwerten des Drehratensensors 103 zu bestimmen.

Diese Bestimmung kann hierbei basierend auf einer Winkeländerung des Erdmagnetfeldes erfolgen.

Beispielweise kann bei geschlossenem Fenster und geschlossener Griffstellung ein Nullsetzen des Öffnungswinkels durchgeführt werden und der entsprechende zugehörige Winkel (Referenzwinkel) des Erdmagnetfelds (bspw. in X-Z-Ebene in Fig. 3, abhängig von der Ausrichtung der geschlossenen Griffstellung) ermittelt werden.

Durch eine Bestimmung der Differenz zu diesem Referenzwinkel kann somit ein Öffnungswinkel des Bauteils bestimmt werden.

Aufgrund der Änderung der Lage des Betätigungsmittels im Raum beim Öffnen und Schließen, ist eine Anpassung des zu Messenden Winkels bzw. der Messachse bevorzugt.

Erfolgt beispielsweise eine Ermittlung des Nullwinkels bei geschlossener Griffstellung und geschlossenem Bauteil in der X-Z-Ebene entspricht dies dem Erdmagnetfeld in der X-Y-Ebene bei geöffneter Griffstellung und geschlossenem Bauteil.

Entsprechend kann unabhängig von den Daten des Drehratensensors und den Daten des Beschleunigungssensors (bzw. Accelerometers) ein geschlossenes Fenster bei geöffnetem und geschlossenem Griff erkannt werden.

Weiterhin kann die Genauigkeit der Winkeldetektion erhöht, bzw. die Sicherheit der dafür genutzten Daten erhöht werden, indem bei geöffnetem Fenster zusätzlich die Bestimmung des Öffnungswinkels mittels der Daten des Magnetometers erfolgt, d.h. der Winkel des Erdmagnetfeldes bspw. in der X-Y-Ebene gemessen wird und eine Differenz zu dem bei geschlossenem Fenster ermitteltem Winkel des Magnetfelds gebildet wird. Dieser sollte dem Winkel entsprechen, der mit den Daten des Gyroskops ermittelt wurde.

Im Folgenden sollen weitere Ausführungen der Bestimmungseinheit beschrieben werden.

In einer Ausführungsform der Bestimmungseinheit weist die Bestimmungseinheit eine Funktionalität zur Detektion möglicher sicherheitsrelevanter Zustände des Bauteils auf.

Anders ausgedrückt ist die Bestimmungseinheit in dieser Ausführungsform eingerichtet sicherheitsrelevante Zustände bzw. anormale Zustände basierend auf den ersten und zweiten Messwerten zu detektieren und, bevorzugt, ein Warnsignal auszugeben, wenn ein sicherheitsrelevanter Zustand bzw. ein anormaler Zustand detektiert wird.

Bei derartigen sicherheitsrelevanten Zuständen kann es sich einerseits um einen Manipulationszustand handeln, d.h. ein Zustand in welchem der Schließmechanismus oder das Bauteil manipuliert wurden, zum Beispiel durch Aufhebeln des Bauteils.

Andererseits kann es sich auch um gefährliche Zustände handeln, wie beispielsweise ein Zustand, in welchem das Bauteil, zum Beispiel das Fenster, zwar geschlossen ist, d.h. an seinem Rahmen anliegt, jedoch der Griff nicht in einem geschlossenen Zustand ist, was ein einfaches Eindringen durch eine unberechtigte Person möglichen würde.

Derartige sicherheitsrelevanten Zustände können durch Auswerten der ersten und zweiten Messwerte durch die Bestimmungseinheit bestimmt werden.

Wird bspw. ein Öffnungswinkel von 0 erfasst, d.h. dass das Bauteil geschlossen ist und das Bauteil am Bauteilrahmen anliegt, und wird ferner erfasst, dass das Betätigungselement in einem Kippzustand oder einem offenen Zustand ist, so kann ein gefährlicher Zustand detektiert werden, da ein leichtes Eindringen durch unberechtigte Person ermöglicht wird.

Wird wiederum erkannt, dass das Bauteil geöffnet ist oder zurzeit geöffnet wird, d.h. das Bauteil nicht am Bauteilrahmen anliegt und somit ein Öffnungswinkel ungleich 0 gegeben ist, jedoch das Betätigungselement in einer geschlossenen Stellung bzw. einem geschlossenen Zustand oder in einem gekippten Zustand bzw. einer gekippten Stellung ist, so kann ein Manipulationszustand erkannt werden, da das Fenster möglicherweise gewaltsam aufgehebelt wurde ohne das Betätigungselement zu betätigen.

Auch eine mechanische Fehlfunktion des Fensters kann detektiert werden, wenn die Stellung bzw. Zustand des Betätigungselements nicht mit der Stellung bzw. des Zustands des Bauteils übereinstimmt, wie beispielsweise eine Kippstellung des Bauteils während das Betätigungselement auf eine offene Stellung eingestellt ist etc.

Zusammengefasst lassen sich aus den Daten der Sensoren und den hieraus bestimmten Zuständen in einer Matrix aus möglichen Betätigungsmittelzuständen (bspw. Griffstellungen auf, zu, gekippt) und den möglichen Positionen des Bauteils (auf, zu, gekippt) neun mögliche Kombinationen ableiten. Bei drei dieser Kombinationen (Bauteil und Betätigungsmittel auf, zu oder gekippt) liegt ein regulär erwarteter Gesamtzustand vor. Weiterhin ergeben sich zwei unsichere Zustände. In diesen ist das Bauteil (bspw. das Fensterblatt) geschlossen, der Betätigungsmittelzustand (bspw. die Griffstellung) ermöglicht aber ein Öffnen oder Kippen. Die vier verbleibenden Kombinationen können allesamt auf eine mechanische Fehlfunktion des Fensters zurückgeführt werden.

Ist das Bauteil offen, der Betätigungsmittelzustand jedoch auf Schließen oder Kipp, kann es sich neben einer mechanischen Fehlfunktion auch um einen Einbruchsversuch handeln.

Eine Auswertung mittels der Bestimmungseinheit auf Basis dieser Matrix ermöglicht eine sichere Detektion aller möglichen Zustände.

Auch durch einen Zustandsübergang kann eine Manipulation des Fensters detektiert werden., wie mit Bezug auf Fig. 4 beschrieben werden soll Bespielweise kann ein Übergang des Bauteils von einem geschlossenen Zustand zu einem offenen Zustand anhand der Messwerte des Beschleunigungssensors 103 bestimmt werden.

Wird mittels des Beschleunigungssensors 103 eine Beschleunigung auf 2 Achsen, jedoch keine Beschleunigung auf einer auf dem Fenster senkrecht stehenden Achse, in Fig. 4 mit X bezeichnet, erfasst, so ist von einem Übergang von einem geschlossenen Zustand zu einem offenen Zustand auszugehen.

Wird wiederum eine Beschleunigung auf nur 2 Achsen detektiert, nämlich auf der Achse senkrecht zum Fenster und längs des Fensters, in Fig. 4 mit X und Z bezeichnet, so ist von einem Kippen des Fensters auszugehen.

Auch kann die Bestimmungseinheit zur Detektion eines Glasbruchs eines Glases des Bauteils, wie bspw. des Fensters, eingerichtet sein und, bevorzugt, ein Warnsignal auszugeben, wenn ein Glasbruch detektiert wird.

Da Bauteil und Betätigungselement, d.h. bspw. Fensterscheibe, Rahmen und Griff eine mechanisch starr verbundene Einheit bilden, liegt ein hohes Maß an Kopplung mechanischer Schwingungen vor. Dadurch können auf die Scheibe einwirkende Schwingungen auch im Betätigungselement detektiert werden. Bewegliche Verbindungen in der Mechanik des Betätigungselements wirken dabei ähnlich einem Tiefpass und verfälschen das Signal. Da bei Glasbruch jedoch ein charakteristisches Frequenzspektrum vorliegt, kann dieses über einen Mustervergleich mathematisch mit einem Referenzsignal korreliert werden. Ab einem gewissen Maß an Korrelation, d.h. bei Überschreiten eines Schwellwerts der Korrelation, zwischen dem durch den Beschleunigungssensor aufgenommenem und dem als Muster hinterlegten Signal wird ein Glasbruch erkannt.

Hierbei kann die Bestimmungseinheit ausgebildet sein, eine mittels des Beschleunigungssensors erfasste Beschleunigung mit einem vorgegebenen Muster zu vergleichen. D.h. es kann ein Musterabgleich zwischen einem für einen Glasbruch spezifischen Musters und den Sensordaten ausgeführt werden.

Ein derartiger Abgleich kann einerseits über eine Fourier-Analyse oder andererseits über eine Faltung mit einem Referenzsignal erfolgen.

Mit den oben genannten Ausgestaltungen der Bestimmungseinheit kann somit nicht nur ein Zustand des Schließmechanismus und ein Öffnungswinkel des Bauteils erfasst werden, sondern es können auch beispielsweise Einbrüche erkannt werden. Auch können sicherheitskritische Zustände wie zum Beispiel ein durch Wind zugefallenes aber nicht verschlossen Fenster detektiert und ein Benutzer kann entsprechend gewarnt werden.

Hierbei kann die Bestimmungseinheit bevorzugt ausgebildet sein, ein Warnsignal (entsprechend des erfasstens Zustands) auszugeben.

Allgemein kann die Ausgabe des Warnsignals hierbei bevorzugt an die externe Einheit durch Übertragung des Warnsignals mittels der drahtlosen Send- und Empfangseinheiten erfolgen. Auch kann die Ausgabe an den Benutzer durch die Bestimmungseinheit direkt, oder über die externe Einheit durch Übertragung des Warnsignals mittels der drahtlosen Send- und Empfangseinheiten erfolgen.

Entsprechend dieser Ausführungsform wird die Detektion der Sicherheitssituation ermöglicht und es werden gleichzeitig die Einbaukosten im Vergleich zu herkömmlichen Systemen drastisch reduziert, da lediglich das Betätigungsmittels, wie beispielsweise der Fenstergriff, getauscht werden müssen. Dies kann von ungeschultem Personal ohne Spezialwerkzeug durchgeführt werden.

Auch ist die Vorrichtung ansprechend gestaltet, da keine zusätzlichen Vorrichtungen, wie Sensoren etc. an dem Bauteilen montiert werden müssen. Das Betätigungsmittel unterscheidet sich äußerlich, bis auf einen ggf. vorhandenen Antennenausgang, nicht von einem herkömmlichen Betätigungsmittel.

Entsprechend einer weiteren Ausführungsform kann die Bestimmungseinheit ausgebildet sein, eine Kalibrierung des Drehratensensor durchzuführen.

Ein Drehratensensor weist im allgemeinen ein technisch bedingtes Rauschen bzw. und einen Offset auf. Zur Kompensation muss eine Kalibrierung des Drehratensensor durchgeführt werden. Hierzu muss ein Zustand vorliegen, in welchem keine Winkelbeschleunigung auf den Drehratensensor einwirken kann. Ein derartiger vordefinierter Zustand kann beispielsweise vorliegen, wenn mittels des Beschleunigungssensors bestimmt wird, dass der Schließmechanismus in einem geschlossenen oder in einem gekippten Zustand ist, da in diesen Zuständen im allgemeinen keine Winkeländerung des Öffnungswinkel auftreten können.

In diesem Zustand kann ebenso eine Einstellung des Öffnungswinkels auf 0 erfolgen, da diese Zustände im Allgemeinen auftreten, wenn das Fenster am Rahmen anliegt, bzw. im gekippten Zustand zumindest stückweise anliegt.

Diese Kalibrierung und Nullsetzung führen jeweils einzeln zu einer Verbesserung der Detektionsergebnisse und zu einer höheren Sicherheit der Zustandsdetektion.

In einer weiteren Ausführungsform kann zudem der Energieverbrauch der Sensoreinheiten durch Ansteuerung der Energiezufuhr basierend auf einem bekannten Zustand des Schließmechanismus erfolgen.

Da es sich bei dem Betätigungsmittel bevorzugt um eine batteriebetriebene Einheit handelt, ist es wichtig an allen Punkten des Systems Energie zu sparen und somit die Batterielaufzeit zu maximieren. Die Stromaufnahme moderner Beschleunigungssensoren ist so gering, dass diese problemlos dauerhaft betrieben werden können. Der Einsatz von Drehratensensoren ist jedoch deutlich energieaufwändiger. Um die Stromaufnahme dieses Sensors zu reduzieren, wird dieser wann immer möglich komplett abgeschaltet. Dies ist ohne einen Verlust an Messdaten möglich. Dies wird durch die Bewegungs- und Erschütterungserkennung mit Hilfe des Beschleunigungssensors ermöglicht. Wenn durch diesen eine Ruhelage erkannt wird ist gleichzeitig sichergestellt, dass die gemessene Drehrate Null betragen wird. Eine explizite Messung der Drehrate durch den Drehratensensor kann somit entfallen. Dieser muss erst dann aktiviert werden, wenn durch den Beschleunigungssensor eine Bewegung erkannt wird.

Anders ausgedrückt, ist der Schließmechanismus in einem geschlossenen oder im gekippten Zustand, so kann in einer Ausführungsform davon ausgegangen werden, dass keine Änderung des Öffnungswinkels erfolgen kann, da das Bauteil im geschlossenen oder gekippten Zustand am Bauteilrahmen fixiert ist. Der Drehratensensor kann somit bei der Detektion eines vorbestimmten Zustandes des Schließmechanismus in einen Energiesparmodus versetzt werden. Wird eine Beschleunigung durch den Beschleunigungssensor erfasst, so kann der Energiesparmodus verlassen werden, um dann geeignet eine Änderung des Öffnungswinkels erfassen zu können.

In gleicher Weise kann der Betriebszustand des zur Datenverarbeitung eingesetzten Mikrocontrollers gesteuert werden. Durch den Einsatz einer digitalen IMU (Inertial-Measurement-Unit, Beschleunigungs- und Drehratensensor in einem Gehäuse kombiniert) ist es möglich direkt aus dem Sensor heraus Interrupts für die Steuerung der Software und damit der Betriebszustände des Mikroprozessors zu generieren. In gleicher Weise, wie der Drehratensensor der IMU durch Auswertung der Daten des Beschleunigungssensors an- und abgeschaltet wird, kann auch der Mikroprozessor in einen Ruhezustand versetzt werden. Das so entstehende System aus in die IMU integriertem Präprozessor und Mikrocontroller kann durch ordnungsgemäße Funktionszuweisung mit einem sehr niedrigem Energieumsatz betrieben werden.

Die drahtlose Sendeeinheit und die drahtlose Empfangseinheit können bevorzugt beide als Sende- und Empfangseinheiten (Transceiver) ausgebildet sein.

Ferner können sie bevorzugt zur verschlüsselten Übertragung ausgebildet sein. Zur Verschlüsselung kann bevorzugt der anerkannte AES-Standard zum Einsatz kommen. Dieser kann mit einer Schlüssellänge von 128 Bit eingesetzt werden.

Bevorzugt kann hierbei ein Funksystem auf SRD-Frequenzen zum Einsatz kommen. Eine Anpassung des Übertragungsprotokolls an den Kundenwunsch bzw. eine vorhandene Vorrichtung, welche als externe Einheit eingesetzt werden soll, ist möglich.

Weiterhin kann die drahtlose Sendeeinheit und die drahtlose Empfangseinheit zur Quittierung empfangener Datenpakete durch den Empfänger ausgebildet sein. Bleibt diese Rückantwort aus, kann der Sendeversuch wiederholt werden. Kurzzeitige Störungen der Funkkommunikation haben somit keinen Einfluss auf das System. Ferner können die Einheiten ausgebildet sein regelmäßige Keep-Alive-Messages der Sensoren zu senden, welche sicherstellen, dass der Empfänger eine dauerhafte Störung der Funkkommunikation oder einen Ausfall des Senders detektieren kann.

Die drahtlose Sendeeinheit und die drahtlose Empfangseinheit können ferner eingerichtet sein, die Sendeleistung in Abhängigkeit der Quittierung anzupassen. Bleibt eine Quittierung aus, so kann bzw. die Sendeleistung erhöht werden.

Um das Datenaufkommen und damit die zum Senden benötigte Energie zu minimieren, werden kann das Betätigungsmittel eingerichtet sein, nur die unbedingt benötigten Informationen übertragen. Dies sind die Griffstellung, der Öffnungswinkel, eine Glasbruchmeldung und der aktuelle Ladezustand der Batterie. Mit diesen Informationen kann ein vollständiges Bild des Fensterzustands erstellt werden.

Ergänzend ist darauf hinzuweisen, dass "umfassend" und "aufweisend" keine anderen Elemente oder Schritte ausschließt und "eine" oder "ein" keine Vielzahl ausschließt. Bezugszeichen in den Ansprüchen sind nicht als Einschränkung anzusehen.

## Patentansprüche

1. Betätigungsmittelanordnung (101) mit einem Betätigungsmittel (102) zur Betätigung eines Schließmechanismus eines Bauteils, wobei das Betätigungsmittel (102) umfasst:
- einen Beschleunigungssensor (103) zur Messung einer Beschleunigung, welche auf das Betätigungsmittel (102) wirkt und zur Ausgabe von ersten Messwerten;
- einen Drehratensensor (104) zur Messung einer Winkelgeschwindigkeit um eine Drehachse und zur Ausgabe von zweiten Messwerten, und
die Betätigungsmittelanordnung (101) ferner umfasst:
- eine Bestimmungseinheit (105), welche eingerichtet ist
- zur Bestimmung eines Zustandes des Schließmechanismus mittels Bestimmung der Lage des Betätigungsmittels (102) im Raum basierend auf den ersten Messwerten des Beschleunigungssensors (103), und
- zur Bestimmung eines Öffnungswinkels des Bauteils basierend auf den zweiten Messwerten des Drehratensensors (104).

2. Betätigungsmittelanordnung (101) nach Anspruch 1, wobei
- die Bestimmungseinheit (105) im Betätigungsmittel (102) angeordnet ist.

3. Betätigungsmittelanordnung (101) nach Anspruch 2, wobei
- die Betätigungsmittelanordnung (101) ferner eine externe Einheit (107) umfasst,
- das Betätigungsmittel (102) ferner eine drahtlose Sendeeinheit (106) zur drahtlosen Übertragung eines Ausgangssignals der Bestimmungseinheit (105) umfasst,
- die externe Einheit ferner eine drahtlose Empfangseinheit (108) zum drahtlosen Empfang des durch die drahtlose Sendeeinheit (106) gesendeten Ausgangssignals umfasst.

4. Betätigungsmittelanordnung (101) nach Anspruch 1, wobei
- die Betätigungsmittelanordnung (101) ferner eine externe Einheit (107) umfasst,
- das Betätigungsmittel (102) ferner eine drahtlose Sendeeinheit (106) zur drahtlosen Übertragung der ersten und zweiten Messwerte an die externe Einheit (107) umfasst,
- die externe Einheit (107) ferner eine drahtlose Empfangseinheit (108) zum drahtlosen Empfang der durch die drahtlose Sendeeinheit (106) gesendeten ersten und zweiten Messwerte umfasst, und
- die Bestimmungseinheit (105) in der externen Einheit (107) angeordnet ist.

5. Betätigungsmittelanordnung (101) nach einem der vorangegangen Ansprüche 1 bis 4, wobei
- das Betätigungsmittel (102) einen ersten Abschnitt (311) und einen zweiten Abschnitt (310) aufweist,
- der erste Abschnitt (311) zur Anbringung an den Schließmechanismus des Bauteils ausgebildet ist,
- der zweite Abschnitt (310) im Wesentlichen rechtwinklig zum ersten Abschnitt angeordnet ist, und
- der Beschleunigungssensor (103) und der Drehratensensor (104) integral im zweiten Abschnitt (310) angeordnet sind.

6. Betätigungsmittelanordnung (101) nach einem der Ansprüche 1 bis 5, wobei
- der Beschleunigungssensor (103) als 3-Achsen-Beschleunigungssensor ausgebildet ist, und
- die Bestimmungseinheit (105) die Lage des Betätigungsmittels basierend auf der entlang der Achsen wirkende Erdbeschleunigung bestimmt.

7. Betätigungsmittelanordnung (101) nach einem der Ansprüche 1 bis 6, wobei
- der Drehratensensor (104) als 3-Achsen-Drehratensensor ausgebildet ist, und
- die Bestimmungseinheit (101) den Öffnungswinkel des Bauteils basierend auf der durch die Bestimmungseinheit (101) bestimmten Lage des Betätigungsmittels (102) sowie der um die Achsen wirkenden Winkelgeschwindigkeit bestimmt.

8. Betätigungsmittelanordnung (101) nach einem der Ansprüche 1 bis 7, wobei
- wenn die Bestimmungseinheit (105) bestimmt, dass der Zustand des Schließmechanismus ein vorbestimmter Zustand ist, die Bestimmungseinheit (105) eingerichtet ist, den Öffnungswinkel auf Null zu setzen und/oder eine Kalibrierung des Drehratensensors (104) durchzuführen.

9. Betätigungsmittelanordnung (101) nach einem der Ansprüche 1 bis 8, wobei
- wenn die Bestimmungseinheit (105) bestimmt, dass der Zustand des Schließmechanismus ein geschlossener Zustand ist, die Betätigungsmittelanordnung (101) eingerichtet ist, den Drehratensensor (105) in einen Energiesparmodus zu schalten.

10. Betätigungsmittelanordnung (101) nach einem der Ansprüche 1 bis 9, wobei
- die Bestimmungseinheit (105) eingerichtet ist, einen sicherheitsrelevanten Zustand basierend auf den ersten Messwerten des Beschleunigungssensors (103), und/oder basierend auf den zweiten Messwerten des Drehratensensors (104) zu detektieren.

11. Betätigungsmittelanordnung (101) nach einem der Ansprüche 1 bis 10, wobei
- das Betätigungsmittel (102) ferner ein Magnetometer (115), bevorzugt ein 3-Achsen-Magnetometer umfasst, welches eingerichtet ist zum Messen eines von außen einwirkenden Magnetfeldes und zur Ausgabe von dritten Messwerten;
- die Bestimmungseinheit (105), eingerichtet ist
- die Lage des Betätigungsmittels (102) im Raum basierend auf den dritten Messwerten des Magnetometers (115) zu bestimmen, und
- den Öffnungswinkels des Bauteils basierend auf den dritten Messwerten des Magnetometers (115) zu bestimmen.

12. Betätigungsmittel (102) zur Betätigung eines Schließmechanismus eines Bauteils durch rotatorische Bewegung des Betätigungsmittels um eine erste Achse, umfassend:
- einen Beschleunigungssensor (103) zur Messung einer Beschleunigung, welche auf das Betätigungsmittel (102) wirkt und zur Ausgabe von ersten Messwerten;
- einen Drehratensensor (104) zur Messung einer Winkelgeschwindigkeit um eine Drehachse und zur Ausgabe von zweiten Messwerten; und
- eine drahtlose Sendeeinheit (106) zur drahtlosen Übertragung der ersten und zweiten Messwerte an eine externe Einheit (107).

13. Zustandsbestimmungsverfahren für ein Betätigungsmittel (102), die Schritte umfassen:
- Messen einer Beschleunigung, welche auf das Betätigungsmittel (102) wirkt mittels eines Beschleunigungssensor (103) des Betätigungsmittels (102);
- Messen einer Winkelgeschwindigkeit entlang einer Drehachse mittels eines Drehratensensors (105);
- Bestimmen eines Zustandes eines Schließmechanismus mittels Bestimmung der Lage des Betätigungsmittels (102) im Raum basierend auf den ersten Messwerten des Beschleunigungssensors (103); und
- Bestimmen eines Öffnungswinkels eines Bauteils basierend auf den zweiten Messwerten des Drehratensensors (105).

## Claims

1. Actuating means arrangement (101) with an actuating means (102) for actuating a closing mechanism of a component, wherein the actuating means (102) comprises:
- an acceleration sensor (103) for measurement of an acceleration, which acts on the actuating means (102) and for output of first measurement values;
- a rotation rate sensor (104) for measurement of an angular velocity about a rotation axis and for output of second measurement values, and
the actuating means arrangement (101) further comprises:
- a determination unit (105), which is configured
- for determination of a state of the closing mechanism by means of determination of the spatial position of the actuating means (102) based on the first measurement values of the acceleration sensor (103), and
- for determination of an opening angle of the component based on the second measurement values of the rotation rate sensor (104).

2. Actuating means arrangement (101) according to claim 1, wherein
- the determination unit (105) is arranged in the actuating means (102).

3. Actuating means arrangement (101) according to claim 2, wherein
- the actuating means arrangement (101) further comprises an external unit (107),
- the actuating means (102) further comprises a wireless transmitting unit (106) for wireless transmission of an output signal of the determination unit (105),
- the external unit further comprises a wireless receiving unit (108) for wireless reception of the output signal, which is send by the wireless transmitting unit (106).

4. Actuating means arrangement (101) according to claim 1, wherein
- the actuating means arrangement (101) further comprises an external unit (107),
- the actuating means (102) further comprises a wireless transmitting unit (106) for wireless transmission of the first and second measurement values to the external unit (107),
- the external unit (107) further comprises a wireless receiving unit (108) for wireless reception of the first and second measurement values, which are send by the wireless transmitting unit (106), and
- the determination unit (105) is arranged in the external unit (107).

5. Actuating means arrangement (101) according to one of the preceding claims 1 to 4, wherein
- the actuating means (102) comprises a first portion (311) and a second portion (310),
- the first portion (311) is constructed for mounting at the closing mechanism of the component,
- the second portion (310) is arranged substantially orthogonally to the first portion (311), and
- the acceleration sensor (103) and the rotation rate sensor (104) are arranged integrally in the second portion (310).

6. Actuating means arrangement (101) according to one of the claims 1 to 5, wherein
- the acceleration sensor (103) is constructed as 3-axes-acceleration sensor, and
- the determination unit (105) determines the position of the actuating means based on the gravitational acceleration acting along the axes.

7. Actuating means arrangement (101) according to one of the claims 1 to 6, wherein
- the rotation rate sensor (104) is constructed as 3-axes-rotation rate sensor, and
- the determination unit (101) determines the opening angle of the component based on the position of the actuating means (102), which is determined by the determination unit (101), and based on the angular velocity acting about the axes.

8. Actuating means arrangement (101) according to one of the claims 1 to 7, wherein
- if the determination unit (105) determines, that the state of the closing mechanism is a predetermined state, the determination unit (105) is arranged to set the opening angle to zero and/or to execute a calibration of the rotation rate sensor (104).

9. Actuating means arrangement (101) according to one of the claims 1 to 8, wherein
- if the determination unit (105) determines, that the state of the closing mechanism is a closed state, the actuating means arrangement (101) is arranged to set the rotation rate sensor (105) into an energy saving mode.

10. Actuating means arrangement (101) according to one of the claims 1 to 9, wherein
- the determination unit (105) is arranged to detect a security relevant state based on the first measurement values of the acceleration sensor (103), and/or based on the second measurement values of the rotation rate sensor (104).

11. Actuating means arrangement (101) according to one of the claims 1 to 10, wherein
- the actuating means (102) further comprises a magnetometer (115), preferably a 3-axes-magnetometer, which is arranged for measuring a magnetic field, which is acting from the outside, and for output of third measurement values;
- the determination unit (105) is arranged
- to determine the spatial position of the actuating means (102) based on the third measurement values of the magnetometer (115), and
- to determine the opening angle of the component based on the third measurement values of the magnetometer (115).

12. Actuating means (102) for actuating a closing mechanism of a component by rotatory motion of the actuating means about a first axis, comprising:
- an acceleration sensor (103) for measurement of an acceleration, which acts on the actuating means (102), and for output of first measurement values;
- a rotation rate sensor (104) for measurement of an angular velocity about a rotation axis and for output of second measurement values; and
- a wireless transmitting unit (106) for wireless transmission of first and second measurement values to an external unit (107).

13. State determination method for an actuating means (102), comprising the steps:
- measuring an acceleration, which acts on the actuating means (102), by means of an acceleration sensor (103) of the actuating means (102);
- measuring an angular velocity along a rotation axis by means of a rotation rate sensor (105);
- determining a state of a closing mechanism by means of determination of the spatial position of the actuating means (102) based on the first measurement values of the acceleration sensor (103); and
- determining an opening angle of a component based on the second measurement values of the rotation rate sensor (105).

## Revendications

1. Ensemble à moyen d'actionnement (101) comprenant un moyen d'actionnement (102) destiné à actionner un mécanisme de fermeture d'un composant, le moyen d'actionnement (102) comprenant :
- un capteur d'accélération (103) destiné à mesurer une accélération qui agit sur le moyen d'actionnement (102) et à délivrer des premières valeurs de mesure ;
- un capteur de vitesse de rotation (104) destiné à mesurer une vitesse angulaire sur un axe de rotation et à délivrer des deuxièmes valeurs de mesure, et
l'ensemble à moyen d'actionnement (101) comprenant :
- une unité de détermination (105) qui est conçue pour
- déterminer un état du mécanisme de fermeture en déterminant la position du moyen d'actionnement (102) dans l'espace sur la base des premières valeurs de mesure du capteur d'accélération (103), et
- déterminer un angle d'ouverture du composant sur la base des deuxièmes valeurs de mesure du capteur de vitesse de rotation (104).

2. Ensemble à moyen d'actionnement (101) selon la revendication 1,
- l'unité de détermination (105) étant disposée dans le moyen d'actionnement (102).

3. Ensemble à moyen d'actionnement (101) selon la revendication 2,
- l'ensemble à moyen d'actionnement (101) comprenant en outre une unité externe (107),
- le moyen d'actionnement (102) comprenant en outre une unité d'émission sans fil (106) destinée à transmettre sans fil un signal de sortie de l'unité de détermination (105),
- l'unité externe comprenant en outre une unité de réception sans fil (108) destiné à recevoir sans fil le signal de sortie envoyé par l'unité d'émission sans fil (106).

4. Ensemble à moyen d'actionnement (101) selon la revendication 1,
- l'ensemble à moyen d'actionnement (101) comprenant en outre une unité externe (107),
- le moyen d'actionnement (102) comprenant en outre une unité d'émission sans fil (106) destinée à transmettre sans fil des premières et deuxièmes valeurs de mesure à l'unité externe (107),
- l'unité externe (107) comprenant en outre une unité de réception sans fil (108) destinée à recevoir sans fil des premières et deuxièmes valeurs de mesure envoyées par l'unité d'émission sans fil (106), et
- l'unité de détermination (105) étant disposée dans l'unité externe (107).

5. Ensemble de moyen d'actionnement (101) selon l'une des revendications précédentes 1 à 4,
- le moyen d'actionnement (102) comprenant une première portion (311) et une deuxième portion (310),
- la première portion (311) étant conçue pour être montée sur mécanisme de fermeture du composant,
- la deuxième portion (310) étant disposée sensiblement à angle droit par rapport à la première portion, et
- le capteur d'accélération (103) et le capteur de vitesse de rotation (104) étant disposés solidairement dans la deuxième portion (310).

6. Ensemble à moyen d'actionnement (101) selon l'une des revendications 1 à 5,
- le capteur d'accélération (103) étant conçu comme un capteur d'accélération à 3 axes, et
- l'unité de détermination (105) déterminant la position du moyen d'actionnement sur la base de l'accélération gravitationnelle agissant le long des axes.

7. Ensemble à moyen d'actionnement (101) selon l'une des revendications 1 à 6,
- le capteur de vitesse de rotation (104) étant conçu comme un capteur de vitesse de rotation à 3 axes, et
- l'unité de détermination (101) déterminant l'angle d'ouverture du composant sur la base de la position du moyen d'actionnement (102) déterminée par l'unité de détermination (101) et de la vitesse angulaire agissant sur les axes.

8. Ensemble à moyen d'actionnement (101) selon l'une des revendications 1 à 7,
- si l'unité de détermination (105) détermine que l'état du mécanisme de fermeture est un état prédéterminé, l'unité de détermination (105) étant conçue pour régler l'angle d'ouverture à zéro et/ou pour effectuer un étalonnage du capteur de vitesse de rotation (104).

9. Ensemble à moyen d'actionnement (101) selon l'une des revendications 1 à 8,
- si l'unité de détermination (105) détermine que l'état du mécanisme de fermeture est un état fermé, l'ensemble à moyen d'actionnement (101) étant conçu pour commuter le capteur de vitesse de rotation (105) dans un mode d'économie d'énergie.

10. Ensemble à moyen d'actionnement (101) selon l'une des revendications 1 à 9,
- l'unité de détermination (105) étant conçue pour détecter un état important en termes de sécurité sur la base des premières valeurs de mesure du capteur d'accélération (103) et/ou sur la base des deuxièmes valeurs de mesure du capteur de vitesse de rotation (104).

11. Ensemble à moyen d'actionnement (101) selon l'une des revendications 1 à 10,
- le moyen d'actionnement (102) comprenant en outre un magnétomètre (115), de préférence un magnétomètre à 3 axes, qui est conçu pour mesurer un champ magnétique externe et pour délivrer des troisièmes valeurs de mesure ;
- l'unité de détermination (105) étant conçue pour
- déterminer la position du moyen d'actionnement (102) dans l'espace sur la base des troisièmes valeurs de mesure du magnétomètre (115), et
- déterminer l'angle d'ouverture du composant sur la base des troisièmes valeurs de mesure du magnétomètre (115).

12. Moyen d'actionnement (102) destiné à actionner un mécanisme de fermeture d'un composant en faisant tourner le moyen d'actionnement sur un premier axe, ledit moyen d'actionnement comprenant :
- un capteur d'accélération (103) destiné à mesurer une accélération qui agit sur le moyen d'actionnement (102) et à délivrer des premières valeurs de mesure ;
- un capteur de vitesse de rotation (104) destiné à mesurer une vitesse angulaire sur un axe de rotation et à délivrer des deuxièmes valeurs de mesure ; et
- une unité d'émission sans fil (106) destinée à transmettre sans fil des premières et deuxièmes valeurs de mesure à une unité externe (107).

13. Procédé de détermination d'état destiné à un moyen d'actionnement (102), ledit procédé comprenant les étapes suivantes :
- mesurer une accélération qui agit sur le moyen d'actionnement (102) à l'aide d'un capteur d'accélération (103) du moyen d'actionnement (102) ;
- mesurer une vitesse angulaire le long d'un axe de rotation à l'aide d'un capteur de vitesse de rotation (105) ;
- déterminer un état d'un mécanisme de fermeture par détermination de la position du moyen d'actionnement (102) dans l'espace sur la base des premières valeurs de mesure du capteur d'accélération (103) ; et
- déterminer un angle d'ouverture d'un composant sur la base des deuxièmes valeurs de mesure du capteur de vitesse de rotation (105).
